(19) Europäisches Patentamt
European Patent Office
Office européen des brevets

(11) **EP 3 320 985 B1**

(12) **EUROPEAN PATENT SPECIFICATION**

(45) Date of publication and mention
of the grant of the patent:
**06.03.2024 Bulletin 2024/10**

(21) Application number: **16821009.4**

(22) Date of filing: **22.06.2016**

(51) International Patent Classification (IPC):
**B05D 1/36** *(2006.01)*   **B05D 5/06** *(2006.01)*
**B05D 7/14** *(2006.01)*   **B05D 7/00** *(2006.01)*
**B32B 15/01** *(2006.01)*   **B32B 27/20** *(2006.01)*

(52) Cooperative Patent Classification (CPC):
**B05D 5/06; B05D 7/14; B05D 7/572; B32B 15/016;
B32B 27/20;** B05D 2202/10

(86) International application number:
**PCT/JP2016/003019**

(87) International publication number:
**WO 2017/006530 (12.01.2017 Gazette 2017/02)**

(54) **MULTILAYER COATING FILM AND COATED ARTICLE**

MEHRLAGIGER BESCHICHTUNGSFILM UND BESCHICHTETER ARTIKEL

FILM DE REVÊTEMENT STRATIFIÉ, ET ARTICLE REVÊTU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2015 JP 2015137202**

(43) Date of publication of application:
**16.05.2018 Bulletin 2018/20**

(73) Proprietor: **Mazda Motor Corporation
Aki-gun
Hiroshima 730-8670 (JP)**

(72) Inventors:
• **YAMANE, Takakazu**
  **Hiroshima 730-8670 (JP)**
• **TERAMOTO, Kouji**
  **Hiroshima 730-8670 (JP)**
• **HIRANO, Fumi**
  **Hiroshima 730-8670 (JP)**
• **OKAMOTO, Keiichi**
  **Hiroshima 730-8670 (JP)**

(74) Representative: **Herrmann, Uwe
Lorenz Seidler Gossel
Rechtsanwälte Patentanwälte
Partnerschaft mbB
Widenmayerstraße 23
80538 München (DE)**

(56) References cited:
WO-A1-2007/145368    WO-A1-2012/002569
WO-A1-2016/088294    GB-A- 2 450 835
JP-A- 2000 017 205    JP-A- 2000 084 473
JP-A- 2005 144 338    JP-A- 2005 205 262
JP-A- 2006 181 505    JP-A- 2006 182 966
JP-A- 2011 025 101    JP-A- 2011 162 732
JP-A- 2011 251 253    US-A1- 2012 021 228
US-A1- 2015 004 401

**Description**

TECHNICAL FIELD

The present invention relates to a multilayer coating film and a coated object.

BACKGROUND ART

Generally, it has been attempted to apply a plurality of coating films on top of each other on a base surface of an automobile body or another automobile component in order to improve protection and appearance of the base. For example, Patent Document 1 discloses: providing a deep color coat containing a deep color pigment (carbon black) on a coating target, which is a metal plate coated with a cationic electrodeposition coat and an intermediate coat; providing a metallic coat containing scale-like aluminum pigments on the surface of the deep color coat; and further providing a clear coat. The deep color coat having the lightness of N0 to N5 of the Munsell color chart, and the scale-like aluminum pigments having a thickness of 0.1 to 1 $\mu$m and an average particle size of 20 $\mu$m are used to obtain a multilayer coating film with significant flip-flop properties.

Patent Document 2 discloses a composition of a metallic coat containing three kinds of aluminum flake pigments A to C each having a different average particle size D50 and a different average thickness. The aluminum flake pigment A has the average particle size D50 of 13 to 40 $\mu$m, and the average thickness of 0.5 to 2.5 $\mu$m. The aluminum flake pigment B has the average particle size D50 of 13 to 40 $\mu$m, and the average thickness of 0.01 to 0.5 $\mu$m. The aluminum flake pigment C has the average particle size D50 of 4 to 13 $\mu$m, and the average thickness of 0.01 to 1.3 $\mu$m. The mass ratios of the solid content of the aluminum flake pigments A to C are set to be as follows: A/B is 10/90 to 90/10; and (A+B)/C is 90/10 to 30/70, and the solid content of (A+B+C) to 100 parts by mass of solid content of resin is set to be 5 to 50 parts by mass. Such constituents are intended to improve the luminance, the flip-flop properties, and the hiding properties.

Patent Document 3 discloses obtaining a bright coating film which is bright and having electromagnetic wave permeability by providing, on a resin base, a coat which contains flat bright materials made of aluminum. The bright materials are oriented such that their flat surfaces lie along a coating film surface, and are arranged such that the average overlapping number y (which is an average number of the bright materials that intersect with one of orthogonal lines orthogonal to the coating film surface) and the average distance x (which is an average distance between adjacent bright materials in the direction of a same orthogonal line with which the adjacent bright materials intersect) satisfy a given relationship.

Patent Document 4 discloses a coating composition to be used as a first colored coating composition in a method wherein a first colored coating film is formed by applying a first colored coating composition over an object to be coated, a second colored coating film is formed by applying an aqueous second colored coating composition over the first colored coating film, a clear coating film is formed by applying a clear coating composition over the second colored coating film, and then the thus-formed first colored coating film, second colored coating film and clear coating film are baked and cured at a time for forming a multilayer coating film. The coating composition contains 30-95 parts by mass of a hydroxylated resin having an acid value of not more than 15 mgKOH/g and 5-70 parts by mass of a polyisocyanate compound, per 100 parts by mass of the resin solid content in the coating composition.

CITATION LIST

PATENT DOCUMENT

Patent Document 1: Japanese Unexamined Patent Publication No. H10-192776
Patent Document 2: Japanese Unexamined Patent Publication No. 2005-200519
Patent Document 3: Japanese Unexamined Patent Publication No. 2010-30075
Patent Document 4: WO 2007/145368 A1

SUMMARY OF THE INVENTION

TECHNICAL PROBLEM

It is the flip-flop properties (hereinafter referred to as the "FF properties") that give an effect of light and shade or metallic impression to a metallic coat provided, for example, on an automobile body. With the FF properties, the lightness of the coated object varies depending on an angle from which it is viewed. That is, with the FF properties, the lightness (i.e., highlights) and the darkness (i.e., shades) become more distinct. The FF properties are often expressed by a flop index (FI) value of X-Rite, Inc. However, the FI value obtained so far in metallic coatings is about 18, in general, and stunning, enhanced metallic impression has not been achieved yet.

Admittedly, the bright materials (e.g., aluminum flakes) oriented along the surface of the bright material-containing layer reduce scattered light from the bright materials and increase specular reflected light. As a result, the lightness of the highlights increases and the lightness of the shades decreases, which contributes to obtaining a greater FI value. However, too strong specular reflection on the bright material-containing layer due to control of the orientation of the bright materials may result in a phenomenon in which a reflection of the light source is seen in the surface like mirror reflection, or only a portion where the specular reflection occurs is bright (i.e., shining white). That is, it seems brightest when viewed from the same angle as the angle of incidence, but the lightness suddenly decreases with the shift of the angle of view, when viewed even from near the specular reflection angle. In other words, the highlighted portion is seen only in a limited area (i.e., it does not seem that a relatively wide area on the surface is shining), which deteriorates the appearance.

Briefly saying, the FI value expresses the degree of lightness when viewed from near the specular reflection angle with reference to the lightness of the shades, and therefore, the FI value is small if the lightness is low when viewed from near the specular reflection angle. Scattering of light caused by bright materials may be enhanced to increase the lightness when viewed from near the specular reflection angle. However, such enhancement increases the lightness of shaded portions, as well. That means that significant FF properties cannot be achieved.

In view of the foregoing background, the present invention is intended to increase the FF properties and enhance the metallic impression in a metallic coating.

SOLUTION TO THE PROBLEM

The present invention controls the specular reflection properties of a bright material, based on an area occupancy of the bright material in a bright material-containing layer, and absorbs scattered light, scattered by the bright material, by a colorant in the bright material-containing layer and by a colored base layer.

A multilayer coating film disclosed herein includes a colored base layer containing a colorant and formed directly or indirectly on a surface of a coating target, and a bright material-containing layer containing flaked bright materials and a colorant and layered on the colored base layer, wherein

a surface smoothness of the colored base layer is 8 or less in a measurement value Wd measured by WaveScan DOI (trade name) manufactured by BYK-Gardner,
the bright material-containing layer has a thickness of 1.5 $\mu$m or more and 6 $\mu$m or less, and
when all the bright materials present in the bright material-containing layer are projected on a surface of the bright material-containing layer, an area occupancy of projections of the bright materials with respect to the surface of the bright material-containing layer is 30% or more and 90% or less.

According to this multilayer coating film, the lightness of the highlights is increased by the specular reflection of light by the bright material contained in the bright material-containing layer. On the other hand, the light diffused or scattered by the bright material, particularly the scattered light reflected multiple times among a plurality of bright materials, is absorbed by the colorant contained in the bright material-containing layer. Further, the light which has reached the colored base layer through a gap between the bright materials is absorbed by the colorant contained in the colored base layer. As a result, the lightness of the shades is reduced. That is, according to the above multilayer coating film, the lightness of the shades can be adjusted by the colorant contained in the bright material-containing layer and by the colored base layer. This is advantageous in increasing the FF properties.

In this specification, the term "diffuse reflection" is used to describe a phenomenon in which incident light is reflected at various angles, and the term "scatter" is used to describe a phenomenon in which incident light is reflected at a different angle than the angle of the incident light.

According to the above multilayer coating film, the area occupancy of the projections of the bright materials with respect to the surface of the bright material-containing layer is 30% or more and 90% or less. The area occupancy is set to be in such a range because if the area occupancy is less than 30%, less light is reflected by the bright materials as specular reflected light, and the metallic impression decreases. In addition, the lightness of the highlights becomes low, which affects adversely in view of the FF properties. On the other hand, if the area occupancy is high, e.g., more than 90%, the specular reflected light becomes too strong. As a result, only a portion of the coated surface where the specular reflection occurs is bright. That is, the lightness diminishes with the shift from the specular reflection angle, even when it is viewed from near the specular reflection angle. As a result, the appearance deteriorates.

The area occupancy can be 30% or more and 90% or less by setting the concentration of the bright materials of the bright material-containing layer to be about 8% by mass or more and about 35% by mass or less. The area occupancy is 45% or more and 75% or less, preferably 65% or less.

Further, according to the above multilayer coating film, light is absorbed by the colored base layer. Therefore, it is not necessary to add a large amount of colorant to the bright material-containing layer to decrease the lightness of the shades. As a result, the bright material is oriented properly (i.e., the bright material is oriented to be parallel to the surface of the bright material-containing layer), and more light is incident on the bright material. This is advantageous in ensuring the brightness and increasing the lightness of the highlights.

Further, the colored base layer has a surface smoothness of 8 or less in the Wd. The bright material is therefore oriented properly. More preferably, the surface smoothness of the colored base layer is 6 or less in the Wd. The surface roughness Ra of the colored base layer is preferably 5% or less of the particle size of the bright material (the particle size is preferably 8 $\mu$m or more and 20 $\mu$m or less).

The thickness of the bright material-containing layer is 1.5 $\mu$m or more and 6 $\mu$m or less. As a result, the bright material is oriented properly, which is advantageous in increasing the lightness of the highlights. Preferably, the thickness of the bright material-containing layer is 20% or less of the particle size of the bright material (i.e., 1.5 $\mu$m or more and 4 $\mu$m or less). The thickness of the bright material-containing layer is set to be in this range to control the angle of orientation of the bright material (i.e., the angle formed between the surface of the bright material-containing layer and the bright material) by the thickness of the bright material-containing layer. The angle of orientation of the bright material decreases with a reduction in the thickness of the bright material-containing layer. The angle of orientation of the bright material is preferably 3 degrees or less, more preferably 2 degrees or less.

Preferably, the bright material-containing layer has a colorant concentration of 7% by mass or more and 30% by mass or less. The colorant of the bright material-containing layer absorbs the light diffused or scattered by the bright material. However, if the colorant concentration is less than 7% by mass, the rate of absorption decreases, and the lightness of the shades is not much reduced. This affects adversely in increasing the FF properties. On the other hand, if the colorant concentration exceeds 30% by mass, light is blocked by the colorant, and the amount of light applied to the bright material is reduced. This affects adversely in ensuring the brightness and the lightness of the highlights.

Larger content of the bright material and the colorant in the bright material-containing layer leads to a reduction in the physical properties of the coating film. Thus, preferably, the total content of the bright material and the colorant in the bright material-containing layer is 50 parts by weight with respect to 100 parts by weight of the resin.

Preferably, aluminum flakes obtained by grinding aluminum foil, and moreover, vapor-deposited aluminum flakes with improved surface smoothness obtained by grinding aluminum that is vapor-deposited on a base, are employed as the bright material to increase the brightness and enhance the metallic impression.

Preferably, such an aluminum flake has a particle size of 8 $\mu$m or more and 20 $\mu$m or less. If the particle size is smaller than 8 $\mu$m, the aluminum flakes are less likely to be oriented properly. If the particle size is larger than 20 $\mu$m, some of the aluminum flakes may stick out of the bright material-containing layer, and the corrosion resistance of the coating target may be reduced.

Preferably, the aluminum flake has a thickness of 25 nm or more and 200 nm or less. If the aluminum flake is too thin, more light passes through the flake, which affects adversely in increasing the lightness of the highlights. In addition, if the thickness of the aluminum flake is too thin with respect to its particle size, the aluminum flakes are easily deformed, which adversely affects the orientation of the aluminum flakes. In view of this point, the thickness of the aluminum flake is preferably 0.4% or more of its particle size, that is, 30 nm or more, for example. On the other hand, if the aluminum flake is too thick, the aluminum flakes are less likely to be oriented properly. In addition, such an aluminum flake increases the necessary volume ratio of the aluminum flakes in the bright material-containing layer to ensure the brightness. The physical properties of the coating film are therefore deteriorated. In view of this point, the thickness of the aluminum flake is preferably 200 nm or less. More preferably, the aluminum flake has a thickness of 80 nm or more and 150 nm or less.

Preferably, the aluminum flake has a surface roughness Ra of 100 nm or less to reduce diffuse reflection or scatter of the light.

In one preferred embodiment, the colorants of the colored base layer and the bright material-containing layer are deep in color with a low visible light reflectance (the Munsell lightness is 5 or less), such as black and red, particularly a blackish color. As described earlier, according to the present invention, the lightness of the shades is reduced by the light absorption effect of the colored base layer. Thus, if a deep color colorant with a low visible light reflectance is employed as the colorant, such a colorant increases the FI value and is advantageous in enhancing the FF properties.

Both a pigment and a dye may be employed as the colorant. Further, two or more kinds of colorants which are mixed together (i.e., a mixed color) may be used.

In one preferred embodiment, the colorants of the colored base layer and the bright material-containing layer are in similar colors. The turbidity of the coating color is therefore reduced, which enhances the impression of density and depth, as well as the metallic impression.

In order that neutral colors are perceived as similar colors, it is desirable that a lightness difference between the neutral colors is 5.0 or less in a Munsell value. In order that chromatic colors are perceived as similar colors, it is desirable that if the hue of one of the chromatic colors is set as a reference (i.e., a zero position) in the Munsell hue circle divided into one hundred sectors, and the number of the one hundred sectors are increased to +50 in a counterclockwise direction and decreased to -50 in a clockwise direction from the reference position, the hue of the other chromatic color is in a range of ±10 from the reference position.

In one preferred embodiment, the colorants of the colored base layer and the bright material-containing layer are in a blackish color. As a result, a grayish color with a high FI value and enhanced metallic impression can be obtained.

In one preferred embodiment, the bright material-containing layer contains a black pigment at a pigment concentration of 18% by mass or more and 23% by mass or less. Setting the pigment concentration to be 18% by mass or more contributes to the absorption of the light scattered by the bright material and an increase in the FI value. Setting the pigment concentration to be 23% by mass or less contributes to substantially avoiding possibilities of being a dark color. This is advantageous in increasing the FF properties.

In one preferred embodiment, a transparent clear layer is layered directly on the bright material-containing layer. The resistance to acids and scratches can be achieved by the transparent clear layer.

The coated object including the multilayer coating film provided on a coating target is, for example, an automobile body. The coated object may also be a body of a motorcycle or bodies of other vehicles, or may be other metal products.

## ADVANTAGES OF THE INVENTION

A multilayer coating film according to the present invention includes a colored base layer containing a colorant, and a bright material-containing layer layered on the colored base layer and containing flaked bright materials and a colorant. The surface smoothness of the colored base layer is 8 or less in Wd, and the thickness of the bright material-containing layer is 1.5 μm or more and 6 μm or less. When all the bright materials present in the bright material-containing layer are projected on a surface of the bright material-containing layer, an area occupancy of projections of the bright materials with respect to the surface of the bright material-containing layer is 30% or more and 90% or less. The FI value is therefore increased, which is advantageous in enhancing the FF properties.

## BRIEF DESCRIPTION OF THE DRAWINGS

FIG. 1 is a diagram schematically illustrating a cross-sectional view of a multilayer coating film.
FIG. 2 is a picture of a bright material-containing layer taken from a surface of the bright material-containing layer.
FIG. 3 is a diagram schematically illustrating a cross-sectional view of a known multilayer coating film to show how light is scattered by bright materials and is diffused on a base layer.
FIG. 4 is a diagram schematically illustrating a cross-sectional view of the multilayer coating film according to the present invention in which scattered light is controlled.
FIG. 5 is a diagram illustrating reflected light for explaining how to calculate an FI value.
FIG. 6 is a graph showing an influence of an area occupancy of a bright material contained in the bright material-containing layer and a pigment concentration of said layer over the FI value.

## DESCRIPTION OF EMBODIMENTS

Embodiments of the present invention will now be described with reference to the drawings. The following description of preferred embodiments is only an example in nature, and is not intended to limit the scope, applications or use of the present invention.

<Example Configuration of Multilayer Coating Film>

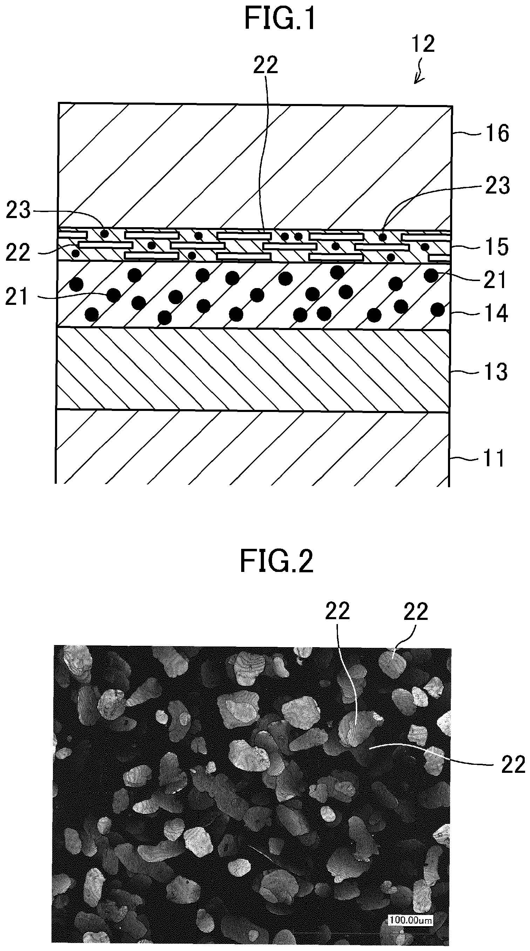

As illustrated in FIG. 1, a multilayer coating film 12 provided on a surface of an automobile body (steel plate) 11 according to the present embodiment contains a colored base layer 14, a bright material-containing layer 15, and a transparent clear layer 16 which are sequentially stacked one upon the other. An electrodeposition coating film (undercoat) 13 is formed on the surface of the automobile body 11 by cationic electrodeposition. The multilayer coating film 12 is provided on top of the electrodeposition coating film 13. In the multilayer coating film 12, the colored base layer 14 corresponds to an intermediate coat, and the bright material-containing layer 15 and the transparent clear layer 16 correspond to a topcoat.

A deep color pigment 21 is dispersed in the colored base layer 14. Flaked bright materials 22 and a deep color pigment 23 in a color similar to that of a pigment 21 of the colored base layer 14 are dispersed in the bright material-containing layer 15. Pigments of various hues including, for example, a black pigment (e.g., carbon black, perylene black, and aniline black) or a red pigment (e.g., perylene red) may be employed as the pigments 21 and 23. It is particularly preferable to employ as the pigment 21 carbon black having a particle size distribution with a peak at a particle size of 300 nm or more and 500 nm or less, and employ as pigment 23 carbon black having a particle size distribution with a peak at a particle size of 200 nm or less.

The surface smoothness of the colored base layer 14 is 8 or less in a measurement value Wd (wavelength of 3 to 10 mm) measured by WaveScan DOI (trade name) manufactured by BYK-Gardner, and the thickness of the bright material-containing layer 15 is 1.5 $\mu$m or more and 6 $\mu$m or less.

The bright material 22 of the bright material-containing layer 15 has a thickness of 25 nm or more and 200 nm or less, and is oriented approximately parallel to the surface of the bright material-containing layer 15. Specifically, the bright material 22 is oriented at an angle of 3 degrees or less with respect to the surface of the bright material-containing layer 15. After having applied a coating, which includes the bright material 22 and the pigment 23, on top of the colored base layer 14, a solvent included in the coating film is vaporized by stoving. As a result, the coating film shrinks in volume and becomes thin, and the bright material 22 is arranged at the orientation angle of 3 degrees or less (preferably 2 degree or less).

When all the bright materials 22 present in the bright material-containing layer 15 are projected on a surface of the bright material-containing layer 15, an area occupancy of projections of the bright materials 22 with respect to the surface of the bright material-containing layer 15 (hereinafter simply referred to as an "area occupancy") is 30% or more and 90% or less.

When a plan view of the bright material-containing layer applied onto a steel base is observed, the bright materials 22 contained in the bright material-containing layer is visible as shown in FIG. 2. Note that a pigment is not contained in the sample bright material-containing layer shown in FIG. 2. Since the bright material 22 is thin (having a thickness of 25 nm or more and 200 nm or less), not only the bright materials 22 present near the surface of the bright material-containing layer, but also the bright materials 22 present at deeper levels are visible through the bright material 22 near the surface of the bright material-containing layer. Since the bright material-containing layer is thin (having a thickness of 1.5 $\mu$m or more ad 6 $\mu$m or less), all the bright materials 22 including the bright materials 22 present at a bottom portion of the bright material-containing layer are visible. The area occupancy is obtainable from an image of the bright material-containing layer taken from its surface side with or without the transparent clear layer provided on its surface.

The colored base layer 14 contains a resin component which may be, e.g., a polyester-based resin. The bright material-containing layer 15 contains a resin component which may be, e.g., an acrylic-based resin. The colored base layer 16 contains a resin component which may be, e.g., an acid/epoxy-based cured acrylic resin.

<Control of Scattered Light, etc.>

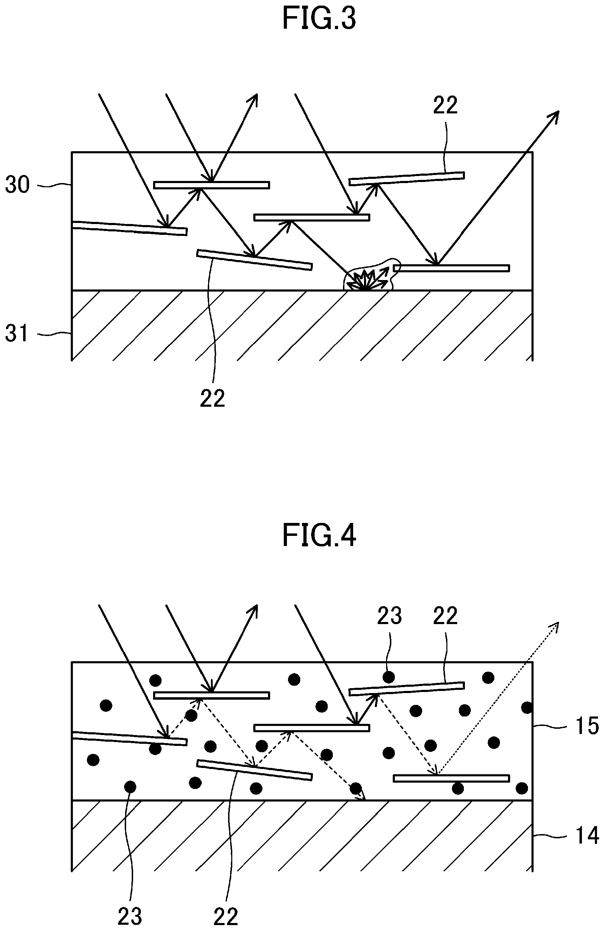

As illustrated in FIG. 3, if a large number of bright materials 22 are dispersed in the bright material-containing layer 30, light is reflected multiple times by the plurality of bright materials 22. The FI value is low if a large portion of the light undergoes multiple reflections and comes out of the bright material-containing layer 30 as scattered light at angles diverging from the specular reflection angle. That is, reducing the scattered light is important to increase the FI value. In addition, the light reaching a base layer 31 after the multiple reflections is diffused by the base layer 31 (i.e., diffuse reflection). The FI value is low if the diffuse reflection is strong. Thus, reducing the diffuse reflection by the base layer 31 is important to increase the FI value.

As illustrated in FIG. 4, the pigments 23 contained in the bright material-containing layer 15 contribute to increasing the FI value by absorbing the scattered light. The multiple reflections increase the optical path length. Due to the increased optical path length, light is more likely to be absorbed by the pigments 23. A greater FI value is obtained as a result. The broken-line arrows show that the pigments 23 reduce the intensity of the scattered light. Further, the scattered light which has reached the colored base layer 14 is absorbed by the colored base layer 14. That means the diffuse reflection is reduced. A greater FI value is obtained as a result.

A small area occupancy of the bright materials 22 reduces specular reflection of light by the bright materials 22, which affects adversely in increasing the FI value. On the other hand, a large area occupancy of the bight materials 22 increases the number of multiple reflections by the bight materials 22, which results in an increase in the scattered light and affects adversely in increasing the FI value.

<Influence of Area Occupancy of Bright Material in Bright Material-Containing Layer And Pigment Concentration in Said Layer Over FI Value of Multilayer Coating Film>

Influence of the area occupancy of the bright material in bright material-containing layer and the pigment concentration in said layer over the FI value of the multilayer coating film was evaluated. The multilayer coating film was formed by layering the colored base layer and the bright material-containing layer on a steel base.

The colored base layer contains commercially available carbon black as the pigment 21, and has a thickness of 10 $\mu$m. The commercially available carbon black has a particle size distribution with a peak at a particle size of 300 nm or more and 500 nm or less. The surface smoothness of the colored base layer is 5 to 6 in the Wd.

For the bright material-containing layer, aluminum flakes (having the average particle size of 12 $\mu$m, a thickness of 110 nm, and the surface roughness of Ra $\leq$ 100 nm) are employed as a bright material 22, and fine powder carbon black having the particle size distribution with a peak at the particle size of 100 nm are employed as the pigment 23. The fine powder carbon black is obtained through wet grinding of commercially available carbon black using disintegrating media (glass beads). The thickness of the bright material-containing layer is 3 $\mu$m. The aluminum flakes are oriented at an angle of 2 degrees or less.

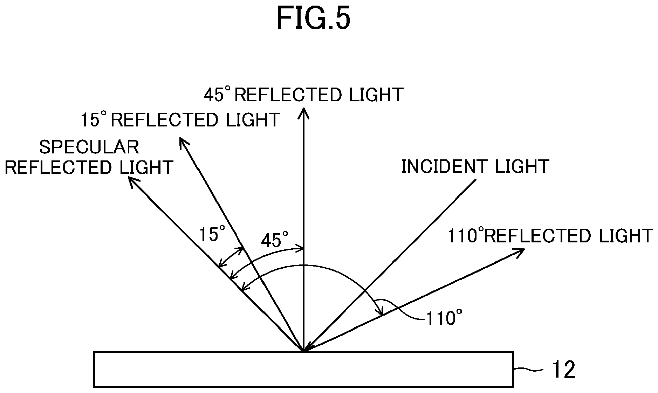

As illustrated in FIG. 5, the FI value is obtained from the equation shown below, wherein L*45° is a lightness index of reflected light (45° reflected light) that is angled 45 degrees from a specular reflection angle toward an angle of incident light, which is incident on a surface of the multilayer coating film 12 at a 45-degree angle from a normal to the surface, L*15° is a lightness index of reflected light (15° reflected light) that is angled 15 degrees from the specular reflection angle toward the angle of incident light, and L*110° is a lightness index of reflected light (110° reflected light) that is angled 110 degrees from the specular reflection angle toward the angle of incident light.

$$FI = 2.69 \times (L*15° - L*110°)^{1.11}/L*45^{°0.86}$$

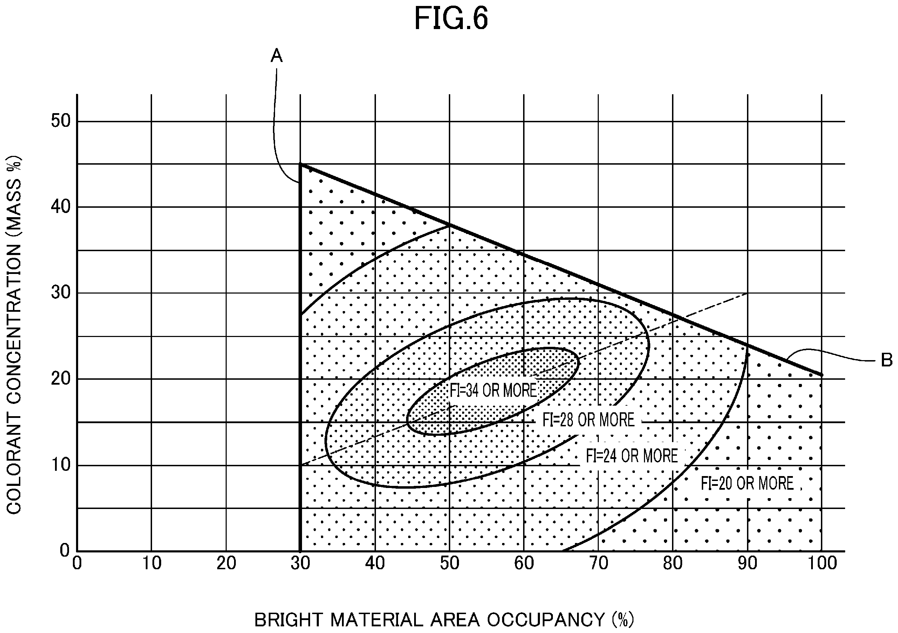

Analysis results are shown in FIG. 6. The FI value is large when the area occupancy of the bright material 22 is 30% or more and 90% or less. In particular, the FI value can be equal to 28 or more if the area occupancy is set to be 35% or more and 75% or less and the pigment concentration is set to be 7% by mass or more and 30% by mass or less. The FI value can be equal to 34 or more if the area occupancy is set to be 45% or more and 65% or less and the pigment concentration is set to be 18% by mass or more and 23% by mass or less.

In the graph shown in FIG. 6, the line A (representing the area occupancy of 30%) expresses the limit of being able to have a bright impression through the aluminum flakes. If the bright materials have an area occupancy smaller than the line A, less light is reflected by the bright materials as specular reflected light, and the metallic impression decreases. The line B expresses that the total content of the bright material and the pigment in the bright material-containing layer is 50 parts by weight with respect to 100 parts by weight of the resin. The physical properties of the coating layer deteriorate steeply if the total amount of the bright material and the pigment exceeds the line B.

<Preferred Examples>

-First Example of Multilayer Coating Film (Gray Color Development)-

Table 1 shows the constituents of a coating film according to the present example.

[Table 1]

| First Example of Multilayer Coating Film (Gray Color Development) | | | |
|---|---|---|---|
| Coating Film Layer | Kinds of Resin, etc. | Mass % of Solid Content | Thickness ($\mu$m) |
| Transparent Clear Layer | Resin: Acid/Epoxy-Based Cured Acrylic Resin | 100 | 30 |
| Bright Material-Containing Layer | Resin: Acrylic-Based Resin | 58.9 | 3 |
| | Pigment: Fine Powder Carbon Black | 21.5 | |
| | Bright Material: Vapor-Deposited Aluminum Flakes (Area Occupancy: 50.5%) | 19.6 | |
| Colored Base Layer | Resin: Polyester-Based Resin | 65.7 | 10 |
| | Pigment: Commercially Available Carbon Black | 7.1 | |
| | Extender Pigment: Barium Sulfate | 27.2 | |

After having employed the wet-on-wet method to apply coatings for the colored base layer, the bright material-containing layer, and the transparent clear layer, onto a steel product, the layers are stoved (heated at 140°C for 20 minutes). Commercially available carbon black is employed as a pigment for the colored base layer. Fine powder carbon black is employed as a pigment for the bright material-containing layer. Vapor-deposited aluminum flakes (having the average particle size of 12 $\mu$m, a thickness of 110 nm, and the surface roughness of Ra $\leq$ 100 nm) are employed as a bright material, and arranged at the area occupancy of 50.5% and the orientation angle of 2 degrees or less.

-Second Example of Multilayer Coating Film (Red Color Development)-

Table 2 shows the constituents of a coating film according to the present example. The present example differs from the first example of the multilayer coating film in that perylene red is employed as a pigment for the bright material-containing layer, instead of the carbon black. The other constituents or a preparation method are the same as those of the first example. The area occupancy of the vapor-deposited aluminum flakes in the bright material-containing layer is 50.5%.

[Table 2]

| Second Example of Multilayer Coating Film (Red Color Development) | | | |
|---|---|---|---|
| Coating Film Layer | Kinds of Resin, etc. | Mass % of Solid Content | Thickness ($\mu$m) |
| Transparent Clear Layer | Resin: Acid/Epoxy-Based Cured Acrylic Resin | 100 | 30 |
| Bright Material-Containing Layer | Resin: Acrylic-Based Resin | 61.5 | 3 |
| | Pigment: Perylene Red | 20.0 | |
| | Bright Material: Vapor-Deposited Aluminum Flakes (Area Occupancy: 50.5%) | 18.5 | |
| Base Layer | Resin: Polyester-Based Resin | 65.7 | 10 |
| | Pigment: Commercially Available Carbon Black | 7.1 | |
| | Extender Pigment: Barium Sulfate | 27.2 | |

-Third Example of Multilayer Coating Film (Red Color Development)-

Table 3 shows the constituents of a coating film according to the present example. The present example differs from the first example of the multilayer coating film in that perylene red is employed as the pigments for the bright material-containing layer and the colored base layer, instead of the carbon black. The other constituents or a preparation method are the same as those of the first example. The area occupancy of the vapor-deposited aluminum flakes in the bright material-containing layer is 50.5%.

[Table 3]

| Third Example of Multilayer Coating Film (Red Color Development) | | | |
|---|---|---|---|
| Coating Film Layer | Kinds of Resin, etc. | Mass % of Solid Content | Thickness ($\mu$m) |
| Transparent Clear Layer | Resin: Acid/Epoxy-Based Cured Acrylic Resin | 100 | 30 |
| Bright Material-Containing Layer | Resin: Acrylic-Based Resin | 61.5 | 3 |
| | Pigment: Perylene Red | 20.0 | |
| | Bright Material: Vapor-Deposited Aluminum Flakes (Area Occupancy: 50.5%) | 18.5 | |
| Colored Base Layer | Resin: Polyester-Based Resin | 60.9 | 12 |
| | Pigment: Perylene Red | 13.9 | |
| | Extender Pigment: Barium Sulfate | 25.2 | |

-Evaluation of Multilayer Coating Films-

The FI vales of the first to third examples of the multilayer coating film were measured. Table 4 shows the results.

[Table 4]

| | |
|---|---|
| First Example of Multilayer Coating Film (Gray Color Development) | FI=34 |
| Second Example of Multilayer Coating Film (Red Color Development) | FI=28 |
| Third Example of Multilayer Coating Film (Red Color Development) | FI=24 |

The FI value of the second example of the multilayer coating film (red color development) is smaller than that of the first example of the multilayer coating film (gray color development). This may be because unlike a black pigment, the red pigment (i.e., perylene red) contained in the bright material-containing layer of the second example of the multilayer coating film strongly reflects visible light in a long wavelength range. That is, the FI value is small maybe because the light is diffused by the red pigment and because the red pigment absorbs less scattered light, scattered by the bright material, than the black pigment.

The FI value of the third example of the multilayer coating film is even smaller than that of the second example of the multilayer coating film. This may be because the red pigment is used in the colored base layer, that is, the colored base layer absorbs less light than the colored base layer containing a black pigment, in the third example of the multilayer coating film.

DESCRIPTION OF REFERENCE CHARACTERS

11    Automobile Body (Steel Plate)
12    Multilayer Coating Film
13    Electrodeposition Coating Film
14    Colored Base Layer
15    Bright Material-Containing Layer
16    Transparent Clear Layer
21    Pigment (Colorant)
22    Bright Material
23    Pigment (Colorant)

**Claims**

1.  A multilayer coating film (12), comprising:

a colored base layer (14) containing a colorant (21) and formed directly or indirectly on a surface of a coating target (11), and a bright material-containing layer (15) containing flaked bright materials (22) and a colorant (23) and layered on the colored base layer (14), wherein
the colored base layer (14) contains: carbon black or perylene red acting as the colorant (21); and an extender pigment,
a surface smoothness of the colored base layer (14) is 8 or less in a measurement value Wd measured by WaveScan DOI (trade name) manufactured by BYK-Gardner,
the bright material-containing layer (15) includes: an acrylic-based resin; aluminum flakes acting as the flaked bright material having a surface roughness Ra of 100 nm or less; and the carbon black or the perylene red acting as the colorant (23),
a concentration of the colorant (23) in the bright material-containing layer (15) is 7% by mass or more and 30% by mass or less,
the bright material-containing layer (15) has a thickness of 1.5 $\mu$m or more and 6 $\mu$m or less, and
when all the bright materials (22) present in the bright material-containing layer (15) are projected on a surface of the bright material-containing layer (15), an area occupancy of projections of the bright materials (22) with respect to the surface of the bright material-containing layer (15) is 45% or more and 75% or less.

2. The multilayer coating film (12) of claim 1, wherein the aluminum flakes each have a thickness of 25 nm or more and 200 nm or less.

3. The multilayer coating film (12) of claim 2, wherein the aluminum flakes are oriented at an angle of 3 degrees or less with respect to a surface of the bright material-containing layer (15).

4. The multilayer coating film (12) of any one of claims 1 to 3, wherein a transparent clear layer is layered directly on the bright material-containing layer (15).

5. A coated object having the multilayer coating film (12) of any one of claims 1 to 4.

**Patentansprüche**

1. Mehrschichtiger Beschichtungsfilm (12), aufweisend:

eine gefärbte Basisschicht (14), die ein Färbemittel (21) enthält und direkt oder indirekt auf einer Oberfläche eines Beschichtungsziels (11) ausgebildet ist, und eine helle materialhaltige Schicht (15), die geflockte helle Materialien (22) und ein Färbemittel (23) enthält und auf die gefärbte Basisschicht (14) geschichtet ist, wobei die gefärbte Basisschicht (14) aufweist: Ruß oder Perylenrot als Färbemittel (21) und ein Verschnittpigment, eine Oberflächenglätte der gefärbten Basisschicht (14) bei einem Messwert Wd, der mit dem von BYK-Gardner hergestellten WaveScan DOI (Markenname) gemessen wurde, 8 oder weniger beträgt, die helle materialhaltige Schicht (15) aufweist: ein Harz auf Acrylbasis; Aluminiumflocken, die als geflockte helle Materialien wirken und eine Oberflächenrauheit Ra von 100 nm oder weniger aufweisen; und den Ruß oder das Perylenrot, die als Färbemittel (23) wirken, eine Konzentration des Färbemittels (23) in der hellen materialhaltigen Schicht (15) 7 Masse-% oder mehr und 30 Masse-% oder weniger beträgt, die helle materialhaltige Schicht (15) eine Dicke von 1,5 $\mu$m oder mehr und 6 $\mu$m oder weniger aufweist, und wenn alle hellen Materialien (22), die in der hellen materialhaltigen Schicht (15) vorhanden sind, auf eine Oberfläche der hellen materialhaltigen Schicht (15) projiziert werden, eine Flächenbelegung der Projektionen der hellen Materialien (22) in Bezug auf die Oberfläche der hellen materialhaltigen Schicht (15) 45 % oder mehr und 75 % oder weniger beträgt.

2. Mehrschichtiger Beschichtungsfilm (12) nach Anspruch 1, wobei die Aluminiumflocken jeweils eine Dicke von 25 nm oder mehr und 200 nm oder weniger aufweisen.

3. Mehrschichtiger Beschichtungsfilm (12) nach Anspruch 2, wobei die Aluminiumflocken in einem Winkel von 3 Grad oder weniger in Bezug auf eine Oberfläche der hellen materialhaltigen Schicht (15) ausgerichtet sind.

4. Mehrschichtiger Beschichtungsfilm (12) nach einem der Ansprüche 1 bis 3, wobei eine durchsichtige klare Schicht direkt auf die helle materialhaltige Schicht (15) geschichtet wird.

5. Beschichteter Gegenstand mit dem mehrschichtigen Beschichtungsfilm (12) nach einem der Ansprüche 1 bis 4.

**Revendications**

1. Film de revêtement multicouche (12), le film comprenant :

une couche de base colorée (14), contenant un colorant (21) et formée directement ou indirectement sur une surface d'une cible de revêtement (11), et une couche (15) contenant des matériaux brillants, laquelle contient des matériaux brillants en paillettes (22) et un colorant (23) et est stratifiée sur la couche de base colorée (14), dans lequel la couche de base colorée (14) contient : du noir de carbone ou du rouge de pérylène agissant en tant que colorant (21) ; et un pigment de charge, un lissé de surface de la couche de base colorée (14) est égal ou inférieur à 8 dans une valeur de mesure Wd mesurée à l'aide du WaveScan DOI (appellation commerciale) fabriqué par BYK-Gardner,

la couche (15) contenant des matériaux brillants comprend : une résine à base d'acrylique ; des paillettes d'aluminium agissant en tant que matériau brillant en paillettes et présentant une rugosité de surface Ra égale ou inférieure à 100 nm ; et le noir de carbone ou le rouge de pérylène agissant en tant que colorant (23), une concentration du colorant (23) dans la couche (15) contenant des matériaux brillants est d'au moins 7 % en masse et de 30 % en masse au maximum, la couche (15) contenant des matériaux brillants présente une épaisseur d'au moins 1,5 $\mu$m et de 6 $\mu$m au maximum, et lorsque tous les matériaux brillants (22) présents dans la couche (15) contenant des matériaux brillants sont projetés sur une surface de la couche (15) contenant des matériaux brillants, une occupation de superficie des projections des matériaux brillants (22), par rapport à la surface de la couche (15) contenant des matériaux brillants, est d'au moins 45 % et de 75 % au maximum.

2. Le film de revêtement multicouche (12) de la revendication 1, dans lequel les paillettes d'aluminium présentent chacune une épaisseur d'au moins 25 nm et de 200 nm au maximum.

3. Le film de revêtement multicouche (12) de la revendication 2, dans lequel
les paillettes d'aluminium sont orientées selon un angle égal ou inférieur à 3 degrés par rapport à une surface de la couche (15) contenant des matériaux brillants.

4. Le film de revêtement multicouche (12) de l'une quelconque des revendications 1 à 3, dans lequel
une couche claire transparente est stratifiée directement sur la couche (15) contenant des matériaux brillants.

5. Objet revêtu comportant le film de revêtement multicouche (12) de l'une quelconque des revendications 1 à 4.

# FIG.1

# FIG.2

# FIG.3

22

30

31

22

# FIG.4

23  22

15

14

23  22

# FIG.5

45° REFLECTED LIGHT

15° REFLECTED LIGHT

SPECULAR
REFLECTED LIGHT

INCIDENT LIGHT

15°    45°

110° REFLECTED LIGHT

110°

12

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10192776 A
- JP 2005200519 A
- JP 2010030075 A
- WO 2007145368 A1